# DEMANDE DE BREVET EUROPEEN

(11) **EP 2 837 817 A1**
(43) Date de publication de la demande: **18.02.2015**
(21) Numéro de dépôt: 14290150.3
(22) Date de dépôt: 12.05.2014
(51) Int. Cl.: F03B 13/16, F03B 13/20

(54) **Dispositif de récupération de l'énergie de la houle dit houlomoteur**

(30) Priorité: 14.05.2013 FR 1301135
(71) Demandeur: Windeck, Claude, 34470 Perols (FR)
(72) Inventeur: Windeck, Claude, 34470 Perols (FR)

(57) **Abrégé**

La présente invention concerne l'énergie de la houle récupérée puis transformée en énergie électrique.

Une ossature rigide horizontale « semi flottante » submergée relie moult systèmes identiques consistant en un petit flotteur lenticulaire (1) actionnant individuellement un alternateur électrique spécial à l'aide d'une transformation du mouvement alternatif vertical en un mouvement rotatif unisens régularisé, concrétisé par une vis verticale non tournante reliée au dit flotteur (1), et par un écrou rotatif (10) relié au dit alternateur électrique. L'ensemble est quasi totalement immergé, puisque seuls les dits nombreux flotteurs (1) sont en surface actionnés par la houle.

Les avantages procurés sont les suivants :
- Actif même à faible houle car éléments mobiles de petites dimensions donc très agiles
- Sans appui côtier ni au fond coûteux et si difficile à établir
- Flottant donc: insensible au marnage et protégé des coups de mer car submergé, halable à tirant d'eau réductible
- Rendement énergétique électro magnétique exceptionnel
- Modulaire d'où extensible et facile à construire et à entretenir
- Léger et économique
- Peu visible donc n'affecte que très peu l'image idyllique naturelle de la mer tout à préserver

## Description

La présente invention concerne le secteur de l'énergie par récupération de celle de la houle puis sa transformation.

Ce genre d'appareil est communément appelé houlomoteur

Point n'est besoin de décrire la houle et ses effets que chacun connait. Beaucoup de systèmes houlomoteurs ont déjà été imaginés et plus ou moins expérimentés dont les résultats sont entachés de divers aléas, en particulier des houlomoteurs à flotteur unique ou multiples reliés par des moyens trop compliqués et/ou fragiles à des dispositifs transformant l'énergie hydraulique récupérée en énergie électrique. Ainsi tout houlomoteur est contraint entre la nécessité de robustesse face à la brutalité de la mer et celle d'une sensibilité récupérant les faibles houles, (besoins qui s'opposent) aux difficultés encore accrues par le côté économique et la résistance chimique à l'eau de mer.

Les principales solutions envisagées sont ainsi souvent contradictoires entre coût et résultats, de plus assez généralement avec point d'appui côtier, et/ou au fond de la mer, qui s'avèrent ruineux et entraînant par suite d'être affecté par le marnage.
- En exemple il y a lieu de se remémorer le brevet WO 2010/082033 A2. Il s'agit de multi flotteurs sphériques totalement submergés liaisonnés ensemble suivant un maillage hexagonal déformable fixé au fond par filins tendus - les dits flotteurs entrainent des moyens de pompage hydraulique.
- Le brevet FR2897118 propose 2 doubles poutres semi libres interpénétrées, croisées en leur milieu, équipées de bouées fixes aux 4 extrémités. Un gros flotteur semi libre est positionné au centre entre les 2 doubles poutres et actionne des pompes hydrauliques périphériques.
- Le brevet 40/3382 décrit une grande structure hors d'eau raccordée au rivage et/ou au fond par un gros pivot. Des flotteurs rectangulaires actionnent des pompes hydrauliques à l'aide de leviers et ressorts.
- Le brevet WO 2007/01967071 à multiples flotteurs totalement submergés accrochés au fond par filins ... ou le brevet 2010/018446 propose encore de multiples flotteurs raccordés au fond par pilier, à transmission mécanique via pompes ......

Tous ces brevets se différencient bien de la présente invention qui ne souffre pas des inconvénients soulignés tels les fixations ruineuses au fond ou côtières, exposant au marnage et non halable, tel transmission mécanique fragile. tel moyen de pompage via un turbinage précédés de moyens électriques .......tel autre à flotteurs très hauts et surfaciquement réduites qui en s'enfonçant profondément dans les vagues perd ainsi en hauteur active (ce qui est nuisible au rendement houlomoteur)

La présente invention pallie les divers inconvénients perçus en proposant systématiquement des moyens simples, économiques, peu fragiles et au rendement énergétique des plus favorables.

Le présent houlomoteur est essentiellement constitué d'une ossature horizontale rigide submergée dont la densité est celle de l'eau. La dite structure est hors d'atteinte des coups de mer puisque assez profondément sous la surface ainsi à l'abri des fortes turbulences marines. La flottabilité relative est assurée par une infrastructure en gros tubes robustes dont l'essentiel sont remplis d'eau, et d'autres étanches vides sans eau, qui par la masse obtenue, procure une inertie globale totale indispensable à lisser les forces issues des nombreux flotteurs qui sont répartis en surface suivant un canevas à grandes mailles facilitant la récupération de l'énergie très dispersée des vagues et ce sans risque d'auto collision.

Chaque flotteur de forme lenticulaire a une épaisseur réduite d'une dizaine de fois la hauteur de la houle et d'un diamètre voisin du pas de la houle la plus réduite souhaitée exploitable.

Fixés à l'ossature submergée, des moyens désignés modules protégés sous carters étanches pressurisés par gaz, transforme l'énergie alternative verticale des flotteurs auxquels ils sont liaisonnés par moyen souple ou semi rigide - dite énergie alternative transformée en mouvement de rotation à l'aide du moyen vis et écrou - en effet à l'inverse de l'usage habituel qui actionne en rotation la vis (ou l'écrou) pour générer un mouvement rectiligne, c'est ici la vis qui est actionnée suivant son axe longitudinal en un déplacement alternatif rectiligne vertical issu des flotteurs.

Le mouvement rotatif obtenu à l'écrou (non coulissant) est mis à profit pour entraînement en rotation d'un alternateur électrique rotatif a axe vertical de forme discoïdale en zone totalement submergée, donc protégé par introduction sous carters étanches pressurises par gaz.

L'ossature horizontale dont les gros tubes comme ci avant décrits sont remplis d'eau, comporte en plus des tubes verticaux plus petits étanches et vides d'eau dont leur hauteur respective dépasse la surface de l'eau concrétisant ainsi des bouées statiques complémentaires stabilisatrices de la profondeur de submersion ainsi quasi constante.

La dite ossature est très rigidifiée par divers haubans et entretoises triangulés dans les 3 dimensions. Des moyens spécifiques interviennent dans la transmission en rotation de l'écrou via l'alternateur, ils incluent des roues libres qui permettent en plus une rotation quasi continue non alternative de l'alternateur, et ce en faisant appel à des engrenages inverseurs et roues libres qui privilégient un des deux sens de rotation de l'écrou.

Des moyens supplémentaires comme un robuste ressort à long ruban enroulé régularisent la rotation à vitesse ainsi moins fluctuante car introduits entre l'alternateur et les dits engrenages inverseurs précédemment en question - dit ressort élastique stockant puis restituant de l'énergie mécanique rotative.

Chaque flotteur actionne individuellement un alternateur et pour bien capter la force complémentaire lors de la descente de la vague, il est ajouté une masse pesante fixée à l'extrémité inférieure de la vis verticale. - ce lest est équilibré par chaque flotteur par leur demi enfoncement dans l'eau.

Il est à souligner que l'ossature n'est pas à poste fixe sur pilier côtier ou au fond mais seulement pourvue de filins élastiques l'empêchant de dériver (vents et/ou courants) car arrimée au fond par ancre conventionnelle.

La construction est aisée en chantier maritime, et permet facilement ensuite le halage par la mise sur site en mer, potentiellement évolutif suivant un nouveau site choisi ou pour éventuel retour jusqu'en chantier naval pour réparation ou modification, éventuellement par chasse de l'eau contenue dans les gros tubes et/ou ajout de bouées amovibles pour réduire le tirant d'eau lors des halages ainsi facilités.

Il y a lieu de noter que le moyen vis et écrou permet aisément une rotation assez rapide de l'alternateur par choix judicieux du pas de filetage de la vis qui pour un déplacement vertical moindre, actionne l'alternateur d'un tour de rotation à chaque mouvement vertical égal au pas de la vis à billes.

D'autres particularités avantageuses seront détaillées par les explications et figures annexes exprimant un dimensionnement non limitatif mais seulement précisés en exemple pour mieux silhouetter l'invention par des évaluations moyennes approchées.

Ces valeurs ne sont donc qu'indicatives et non opposables.

La présente invention concerne donc la récupération de l'énergie hydraulique de la houle en mer puis sa transformation en énergie électrique, sujet moult fois traité, qui ici est détaillé par des moyens inédits décrits ci-après :

Il est constaté que l'énergie de la houle est très dispersée, sa récupération nécessite donc des moyens étalés sur une grande surface.

L'organe essentiel capteur/récupérateur est le plus souvent à base de flotteurs se maintenant en surface, il est donc primordial de bien le conformer.

Les dits flotteurs de grande taille, donc de grande surface, pourraient à première vue être la bonne solution...qui en fait s'avère inadéquate car s'appuyant sur plusieurs ondulations (vagues) de la mer, les dits flotteurs importants moyennent ainsi les hauteurs de vagues, le lissage obtenu réduit d'autant l'ampleur des mouvements verticaux alternatifs dont la plus grande variation de hauteur est si souhaitable.

Par contre, la dispersion de nombreux petits flotteurs (1) s'avère un moyen des plus adéquats, dits petits flotteurs, espacés de 10 à 20 mètres environ, et seulement de 4 à 8 mètres de diamètre, dits flotteurs qui voisinent une taille optimum lorsque leur diamètre est quelque peu inférieur au demi-pas de la plus faible houle espérée exploitable. Les dits flotteurs doivent aussi n'avoir qu'une faible épaisseur d'environ 0,5 à 1 mètre - En effet, pour un volume déterminé, un faible diamètre conduirait à une grande épaisseur - cette grande épaisseur s'enfoncerait donc profondément dans la vague et ferait perdre d'autant l'ampleur du mouvement vertical qu'il est primordial de conserver maximum, au mieux à peine inférieur de la hauteur de la houle.

La présente invention fait donc usage de multis petits flotteurs (1) comme expliqué ci-avant, qui se maintenant à demi enfoncés en surface régulièrement espacés et juxtaposés aux fins de ne pas interférer entre eux, et pour que la mer puisse tous les atteindre sans auto-collision. De plus, leur forme est de préférence lenticulaire, pour éviter tout choc frontal avec les vagues. Ils sont chacun reliés par rotule élastique située à leur centre inférieur via à un système électro-mécanique individuel, concrétisant ainsi un module indépendant reproduit très nombreux autant que de flotteurs.

La juxtaposition astucieuse des dits modules, qui sont totalement submergés sous chacun de leur flotteur respectif, est concrétisée par une ossature « semi-flottante » c'est-à-dire totalement submergée mais entre deux eaux à une profondeur d'environ 10 à 20 mètres entretenue constante de la surface moyenne de la mer par des tubes verticaux étanches et vides d'eau concrétisant des bouées passives de petites sections.

La dite ossature de grandes dimensions d'environ 30 à 100 mètres de large pour 100 à 300 mètres de long est horizontale en incorporant 10 à 80 modules tous identiques. La dite ossature très rigide est constituée de forts tubes horizontaux très rigides d'environ 0,4 à 0,8 mètres de diamètre (6) remplis d'eau qui sont assemblés, par liaisons robustes à chacune de leur extrémité, et par des entretoises tubulaires ainsi que par des haubans (6') triangulés rigidifiant suivant les 3 dimensions constituant ainsi une ossature charpentée très aérée permettant à la mer une pénétration optimum sans obstacle frontal incorporant les différents modules comme déjà dit.

Des tubes longs et légers (7) de 0,2 à 0,4 mètres environ de diamètre, positionnés verticalement, de plus étanches et vides (sans eau) sont ajoutés à la dite charpente et dépassent la surface moyenne de la mer d'environ 2 mètres et plus. Ce sont des bouées passives qui supportent la dite charpente équipée de leurs modules. Cet ensemble est pesant moyenné conférant à l'ensemble une densité voisine de celle de l'eau... ce qui permet la « semi flottaison entre deux eaux - les dits tubes verticaux étanches verticaux constituent donc des flotteurs dont l'extrémité supérieure dépasse quelque peu la surface, permettent une régulation automatique de la profondeur de submersion de tout l'ensemble. En effet cette régulation automatique de profondeur n'est pas évidente, pour mieux l'assimiler il faut opérer par comparaison de comportement suivant 2 diamètres de tubes verticaux utilisés en bouée statique.

Entendu que la masse de la grande structure M est conservée identique et que la durée t de tentative d'évolution du niveau d'immersion est également identique. Par principe d'Archimède la force F verticale est proportionnelle au diamètre des tubes bouées. L'accélération dynamique du mouvement vertical tenté est égale à la force F divisée par la masse M est égale à γ. L'amplitude cinématique du dit mouvement vertical tenté est égale à la moitié de t au carré, multiplié par l'accélérateur γ est égale à H. Ainsi donc avec un petit diamètre (comme proposé dans ce brevet) F sera faible ainsi que γ d'où mouvement vertical H petit (ce qui est recherché).

A l'opposé avec des bouées statiques de grand diamètre F sera grande ainsi que γ d'où mouvement vertical H important (ce qu'il faut éviter pour ne pas perdre la stabilité automatique de profondeur d'immersion).

Nota : Les flotteurs actifs sont très exactement élaborés avec la même considération mais alors agencée en inverse (il faut un grand diamètre pour les flotteurs actifs)

Le dit ensemble, dont le poids d'eau dans les tubes horizontaux (6) ajouté au poids des modules et de celui de la charpente, acquière ainsi une masse considérable qui, immobile sous l'eau, est donc inertielle statique qui s'oppose automatiquement aux forces alternatives aléatoires générées par les flotteurs (1).

Tout cet ensemble est donc totalement submergé ainsi en zone tranquille, situé avec intérêt hors d'atteinte des turbulences destructives de la houle en surface.

Chaque flotteur (1) est surtout actif en vague ascendante, puis ensuite n'étant plus porté par la vague descendante ne s'avérerait donc seulement efficace qu'à demi temps.

Pour remédier à cet inconvénient et obtenir une action motrice à double effet, donc à plein temps, il convient d'ajouter une masse pesante à l'organe récepteur qui est la vis à billes (2) et qui, alors soulevé par la vague dans un mouvement actif montant est ensuite, lors de la descente, entraîné par la masse pesante dans un mouvement rendu ainsi actif. La faible efficacité initiale à mi-temps devient alors à temps complet, ce qui est très avantageux en étalant dans le temps les forces actives à transmettre.

La dite masse pesante (8), est constituée d'un cylindre incluant du lest d'une densité économiquement la plus élevée possible, pour ainsi en réduite les dimensions, surtout celle de la hauteur qui, pendante accrochée sous la vis à billes (2), n'accroît ainsi favorablement que peu la hauteur totale submergée, donc n'accroît heureusement que peu le tirant d'eau.

La dite masse pesante (8) conformée suivant un cylindre de très gros diamètre (environ 1 à 1,5 mètres) permet aussi par ce diamètre important de faciliter les moyens anti-rotatoires s'opposant au couple de renversement du mouvement de rotation de l'écrou à billes (10) par une force d'appui tangentielle ainsi d'autant réduite.

La dite masse pesante (8) est clavetée solidaire (37) à la vis à billes (2) verticale, la prolonge par le dessous, la dite masse pesante se déplace donc verticalement sans contact dans un espace interne au carter (17) est cependant retenue de toute tentative de rotation par des roulettes ou glissière (36) enserrant au moins deux guides verticaux (35) fixes et robustes solidaires du carter (17) .

La dite masse pesante souhaitée de grand diamètre n'aura donc qu'une faible force d'appui appliquée à ses glissières et/ou roulettes (36) évoluant facilement sans effort sur les guides fixes (35) du carter (17), ce qui est très souhaitable.

Les modules incorporant chacun un système électro-mécanique sont tous totalement submergés, ce qui oblige qu'ils soient protégés incorporés dans un carter individuel étanche.

Pour accroître la sécurité d'étanchéité les dits carters contiennent une surpression pneumatique (d'environ 2 bars) issue d'un compresseur annexe placé hors d'eau...commun à tous les modules chacun raccordé pneumatiquement par tuyaux branchés à travers presse étoupe (32).

Le mouvement des flotteurs, suivant les ondulations de la houle, est alternatif vertical qui ne facilite pas une manoeuvre directe (peu efficace) d'un alternateur électrique énorme et coûteux lorsqu'il est rectiligne et à déplacement relatif inducteur/induit trop lent.

La présente invention consiste donc à transformer le mouvement alternatif rectiligne en mouvement rotatif par un ensemble mécanique introduisant entre autres deux organes bien connus - il s'agit de la vis (2) et de l'écrou (10) dont le filetage réciproque transforme un mouvement rectiligne en mouvement rotatif (et vice-versa).

L'irréversibilité du mouvement rectiligne en mouvement rotatif des vis et écrou est bien connu et presque exclusivement exploité (étaux, serre-joints et toutes fixations ...). Heureusement, il existe des vis à billes (2) et écrou (10) correspondant qui, lorsque le pas de filetage n'est pas trop réduit, permet une transformation du mouvement rectiligne en mouvement rotatif et ce, avec une perte d'énergie tolérable.

Ainsi donc une vis à billes (et son écrou) positionnée verticalement assurera la dite transformation, dès manoeuvrée, par un flotteur (1) auquel elle est reliée à l'aide d'une tige coulissante (4) traversant la paroi du carter étanche (17) pressurisé pourvu d'un joint coulissant d'étanchéité facilité par la pressurisation du carter (17) prolongée par un jonc flexible (ou par filin souple) (5). Le mouvement rotatif alternatif de l'écrou est assuré car le dit écrou est contraint, entre deux butées à billes fixes (24, 24'), de ne pas pouvoir se déplacer longitudinalement verticalement. Le mouvement rotatif obtenu est cependant alternatif ... Pour pallier cet inconvénient 2 roues libres à billes (12 et 12') à rotation/blocage alternés contraires sont solidaires, d'une part de l'écrou et d'autre part, à 2 roues dentées (21 et 22) animées l'une par rapport à l'autre d'un sens de rotation contraire, engrenant ensemble, par l'intermédiaire d'un ou plusieurs groupes d'engrenages inverseurs : soit à denture cylindrique (15 et 15') OU à denture conique, dont leur rotation est interrompue un instant sur deux (issu du mouvement alternatif) nécessite une troisième roue libre à billes (23) interposée entre le rotor de l'alternateur solidaire de la bague (21') et la roue (21).

Le mouvement rotatif uni-sens est donc acquis mais encore entaché d'accélérations puis ralentissements successifs. Pour pallier cet inconvénient une liaison élastique (16) interposée entre la couronne (21') solidaire du cylindre (9') et le barillet (9) permet d'atténuer les dites variations rythmiques de vitesse de rotation. La dite liaison élastique consiste en un très puissant ressort à long ruban (16) enroulée dans un barillet (9) dont une extrémité est solidarisée au cylindre (9') tandis que l'autre extrémité est solidaire du barillet (9), d'où est en final prélevée l'énergie rotative uni-sens quasi régulière vers un alternateur électrique (13).

Les dits modules comportant des moyens électro-mécaniques qui nécessitent lubrification et refroidissement, surtout vrai pour la vis à billes et son écrou mécaniquement très sollicités générerait des échauffements.

Un ruissellement d'huile lubrifiante et réfrigérante est distribuée tant à l'intérieur qu'à l'extérieur de la vis à billes (2) aménagée creuse, puis au mécanisme à engrenages (15...) ainsi qu'au système à ressort (16) ...dit ruissellement concrétisé après pompage à travers le tube (18) fixé au fond du carter (17) contenant de l'huile (19).

Le dit pompage est réalisé par une pompe à piston classique, interne à la vis à billes creuse mobile, vis-à-vis du tube (18) fixé au fond du carter (17) équipé d'un piston situé à son extrémité supérieure. La partie alternateur électrique est seule opérant à sec protégée par des chicanes (26 - 26') (ou autres joints tournants). Le refroidissement de la dite partie sans huile est cependant très aisé car en contact avec le carter (17) lui-même refroidi par submersion en eau froide de la mer.

Le dit alternateur électrique (13) peut être très conventionnel ... cependant dans la configuration de la présente invention une forme discoïdale aplatie s'avère préférable ainsi que des dispositifs magnétiques très particuliers peu volumineux et économiques.

Le rotor du dit alternateur est un disque rigide (13), solidaire du barillet (9), dont la bande périphérie est garnie de multiples paires d'aimants permanents (29) nord sud juxtaposés à plat qui constituent donc des éléments inducteurs. Le dit inducteur du rotor tournant est interposé dans l'entre-fer de l'induit du stator fixe (27) équipé du bobinage (28). En rotation cette configuration génère un courant alternatif monophasé. Chacun connaît les avantages du courant triphasé, en conséquence, le disque (13) pourra être composé de 2 alternateurs complémentaires identiques à celui ci-avant, mais cependant décalés angulairement d'un tiers de pas des paires d'aimants, décalage en avance d'un tiers du pas pour l'un et 2 tiers de pas pour l'autre.

Aussi le courant triphasé est donc ainsi facilement obtenu s'il s'avérait indispensable. (ou autres courants monophasés)

Le diamètre du disque, équipé d'aimants ci-avant décrit, est avantageusement important d'environ 1,5 à 2,5 mètres pour permettre la juxtaposition de très nombreuses paires d' aimants (environ 50 à 100) dont le pas le plus préférable voisine 10 à 15 cm environ.

Pour une vitesse de rotation relativement rapide fonction du pas (d'environ 15 à 25 centimètres)de la dite vis à billes (2) en question ci-avant permettant d'obtenir une vitesse d'environ 70 à 700 tours par minute fonction de la hauteur de vague (et du pas de la houle) ... procure une fréquence du courant 1,5 à 15 fois environ celle industrielle habituelle de 50/60 Hz. Cette fréquence recherchée élevée est justifiée car procure des réductions d'encombrement et de coût du stator magnétique de l'alternateur, dont l'induit a ainsi une section magnétique qui peut être d'autant réduite, par contre un accroissement de la qualité (pertes plus réduites) des matériaux magnétiques est indispensable.

L'induit stator magnétique habituellement monolithique feuilleté à encoches présente des coûts importants et un bobinage délicat, et de plus à multiples enroulements.

C'est pourquoi l'induit stator magnétique unique est concrétisé par juxtapositions de noyaux magnétiques (29) désignés habituellement « en C » - Les dits « C » sont juxtaposés au même pas que les aimants, lesquels mobiles passent sans contact dans l'entre-fer des « C » qui permettent en plus, au cours de l'assemblage, l'introduction aisée du bobinage induit réduit à sa plus simple expression car constitué au minimum par 2 grandes bobines (28) parcourant toute la périphérie de l'induit, qui sont très faciles à réaliser. Respectivement chacune de ces 2 bobines (28a, 28b) est alternativement introduite dans un « C » (27a) puis hors le « C »adjacent (27b), et ce successivement au pas double de celui des aimants.

Cette succession en alternance est indispensable sans croisement, ce qui s'avère indispensable autant que simple. Cependant les 2 bobines sont parcourues par des courants en inversion de phase et leur conjonction s'avérerait impossible hors cette disposition alternée. Ces bobines sont de plus pourvues de prises électriques intermédiaires (33) qui, par leur commutation adéquate permettent une régulation (30) des énergies électriques générées par chacun des alternateurs internes aux modules.

La dite régulation (30) est gérée par un analyseur électronique des grandeurs électriques, issues de chaque alternateur, regroupés par câbles (31) à un caisson (30') contenant le dit analyseur et un calculateur de régulation télécommandant la commutation électronique de régulation (30) des prises intermédiaires (33) ... dans le but d'unifier la valeur de l'énergie générée de chaque alternateur aux fins d'obtenir la valeur la plus semblable et au mieux égale (tension ou intensité).

C'est seulement après obtention d'une valeur du courant alternatif très voisine de chaque alternateur qu'il est opéré un redressement électronique - les dits courants devenus ainsi continus (tension ou intensité) et de valeur au mieux identique peuvent enfin être assemblés en série et/ou parallèle en reliant chacun de leur câble à un gros bornage sur lequel est aussi relié le câble sous-marin qui est parcouru par courant continu.

Toutes ces opérations sont indispensables car chaque alternateur génère un courant à une fréquence et phase indépendantes seulement assujetties pour chacun aux aléas de la houle... et de ce fait les alternateurs ne peuvent être connectés ensemble car sans aucun synchronisme possible.

A noter aussi que le dit courant continu a l'avantage de ne pas générer les effets inductifs si nuisibles de ligne. (de câble sous-marin encore plus perturbateur)

Parmi les tubes étanches verticaux (7) dont l'extrémité supérieure dépasse le niveau moyen de la mer, un de ces tubes est renforcé et prolongé d'environ 2 mètres supplémentaires. Il réside au milieu de l'ensemble des modules. Sa surélévation permet d'y jucher un habrit spécifique(34) d'environ 2 mètres de diamètre, il se trouve hors d'eau et ainsi protégé de l'essentiel des coups de mer. Il est aussi de forme lenticulaire et contient un compresseur d'air permettant la mise en pression pneumatique de tous les modules en air déshydraté et d'un caisson (30') par un tube vertical rigide (35).

Le dit compresseur admet l'air par l'intermédiaire d'une protection composée d'un clapet schnochel et de filtres déshydratants. Il est de préférence à piston (ou à membrane) à mouvement actionné par un flotteur (39) lesté spécifique de préférence de forme annulaire, coulissant, concentrique aux tubes (7 et 35), suivant une course d'environ 0,50 mètres positionnée à hauteur moyenne de la mer.

La transmission du flotteur au piston (39) est réalisée par une tringlerie qui apporte au compresseur l'énergie collectée par le flotteur (39), indispensable à la compression de l'air.

Le caisson (30') étanche et qui est aussi à atmosphère surpressée est situé à l'aplomb du tube (7) équipé de l'habrit du compresseur (34), en zone hors turbulence de la houle car sous l'ossature, il contient les moyens électroniques d'analyse et de télécommande de régulation électrique des alternateurs expliquée ci-avant, il contient aussi le regroupement électrique des câbles (31) de transmission de grandeurs électriques et des câbles de puissance des énergies générées, chacune préalablement gérée par la régulation et redressement électronique.

Pour éviter toute dérive engendrée par des courants d'eau et/ou d'air, la dite grande structure « semi flottante » submergée est maintenue sur site par filins (36) élastiques reliés au fond de la mer par des ancres conventionnelles et ce, indifféremment quel que soit la profondeur tout en conservant à la dite structure une insensibilité au marnage car semi flottante, à profondeur quasi constante vis-à-vis de la hauteur moyenne de la mer.

De plus, la configuration modulaire de la grande structure décrite permet toute extension ou réduction du nombre de modules tous identiques, l'entretien en est aisé car chaque module peut être individuellement extrait en entier de son logement spécifique aménagé dans la charpente de l'ossature qui est de plus démontable.

La signalisation (37) maritime évidemment indispensable est fixée à chaque flotteur (1) et de plus au sommet de l'habrit hors d'eau (qui s'éclaire la nuit), elle est d'autant nécessaire car l'essentiel étant submergé, le présent houlomoteur est donc quasi invisible sur la mer qui par suite, n'en disgracie pas l'aspect naturel tant à préserver.

La facilité de construction, son poids relatif modeste, sa robustesse, sa submersion à l'abri des agressions de la houle, sa mobilité et sa grande efficacité, ... joints à d'autres caractéristiques valorisantes très peu souvent réunies, confèrent à cet houlomoteur un économique investissement qui n'est pas grevé par des frais de fonctionnement et/ou d'entretien prohibitifs hélas souvent rencontrés dans la récupération de l'énergie renouvelable qui s'avère ainsi presque utopique car mal comprise et envisagée avec des moyens très disproportionnés.

### PRESENTATION DES FIGURES

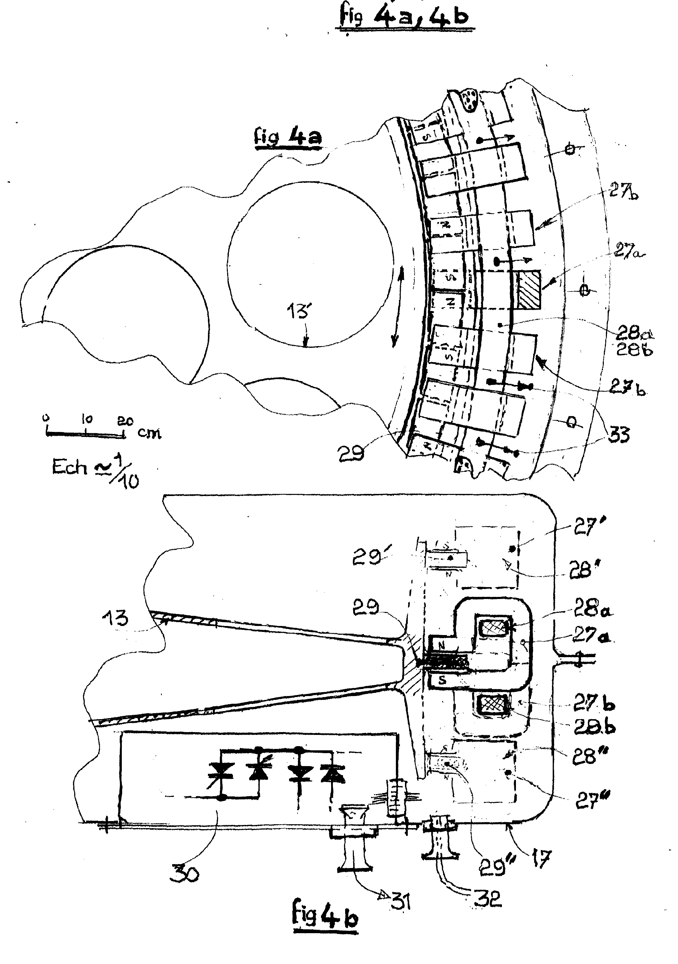

Les croquis annexes illustrent la présente invention d'un boulomoteur :

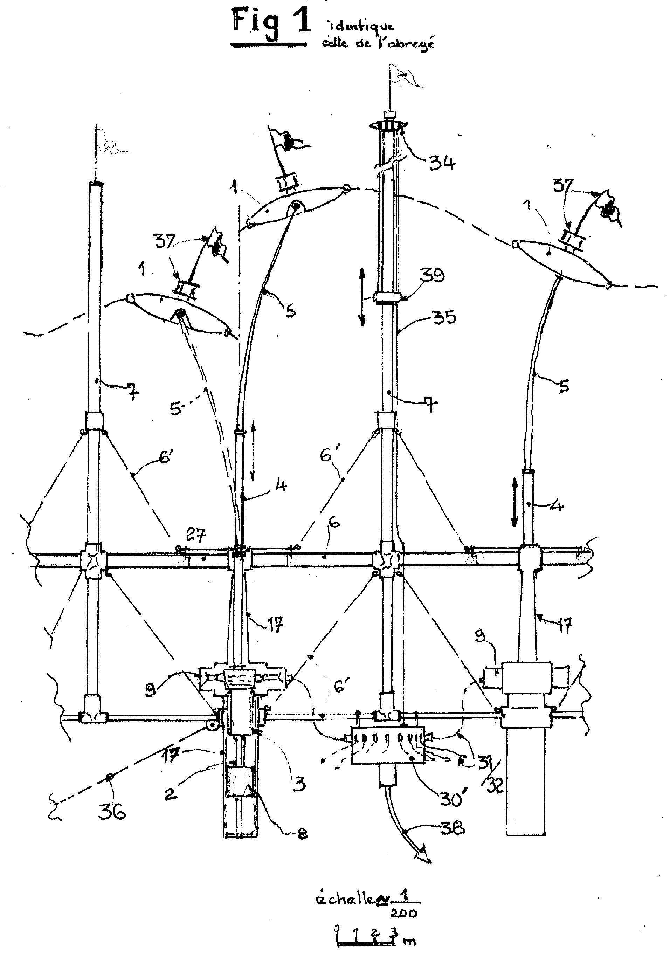

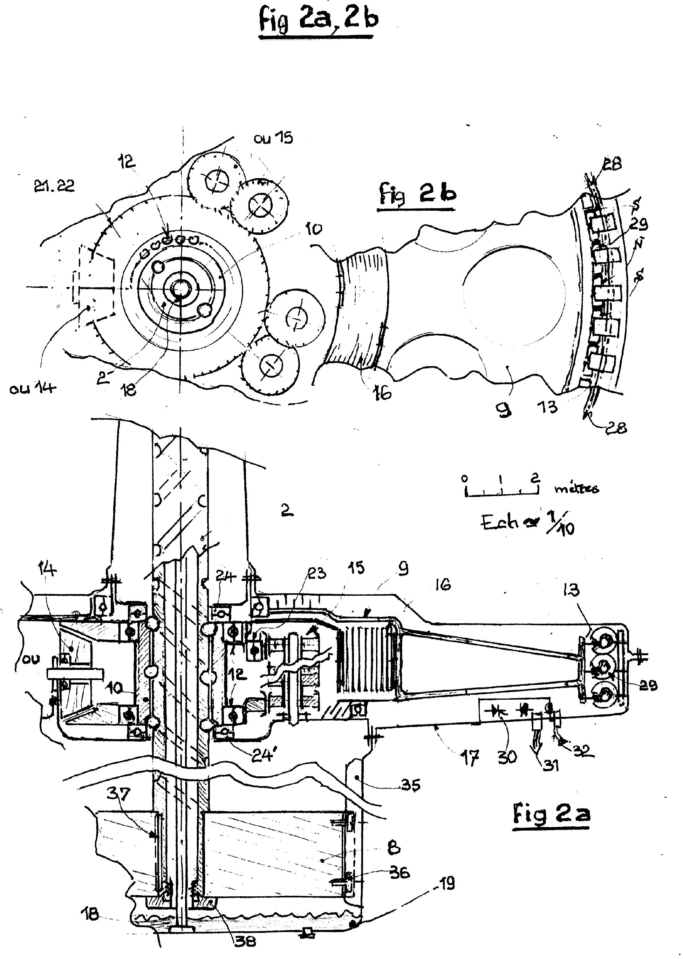

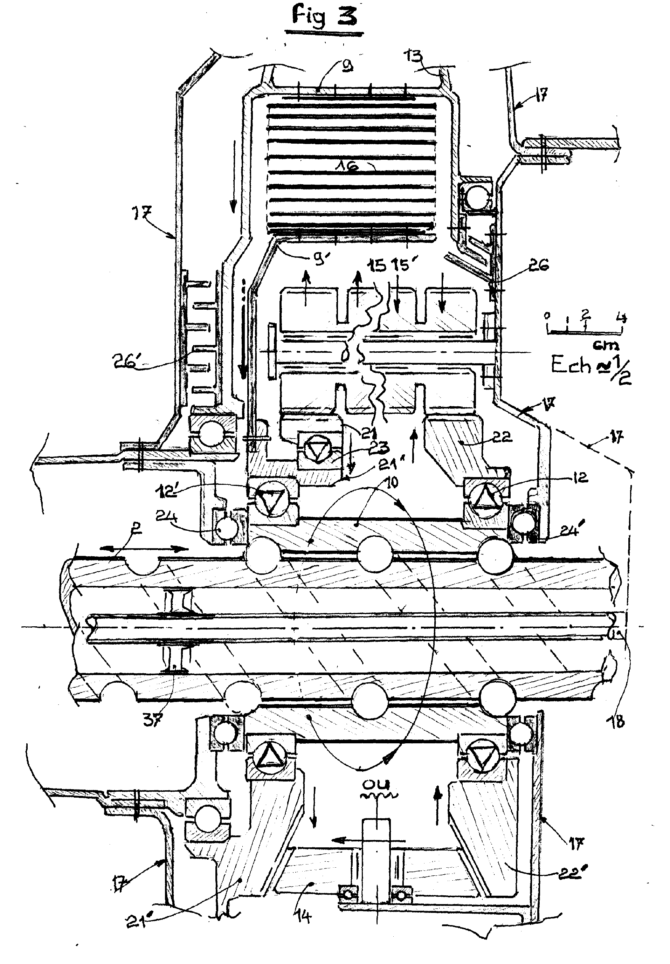

- Fig 1 qui est aussi celle de l'abrégé
   Vue générale verticale de l'ossature, modules ....submergés en mer.
- Fig 2a
   Coupe horizontale à travers vis à billes, inverseur de sens, ressort, alternateur électrique (rotor à aimants et stator incluant bobinage).
- Fig 2b
   Coupe verticale, mêmes organes qu'en 2a, ajout de la masse pesante.
- Fig 3
   Coupe verticale, détail inverseur, vis à billes, ressort, roues libres.
- Fig 4a
   Coupe horizontale, détails alternateur électrique, rotor et stator.
- Fig 4b
   Coupe verticale, détails comme en fig 4a, plus connexions.

## Revendications

1. Dispositif de récupération de l'énergie hydraulique de la houle de mer et sa transformation en énergie électrique, dispositif souvent appelé houlomoteur, organisé en une assez grande structure rigide d'environ 30 à 100 mètres de large par 100 à 300 mètres de long, dit structure incorporant 10 à 80 modules hydro-électriques tous identiques, régulièrement dispersés de 10 à 20 mètres, chacun introduit dans un carter individuel étanche pressurisé, incorporés démontables à la dite structure qui est construite en gros et robustes tubes (6) disposés à l'horizontale de diamètre voisin de 0,4 à 0,8 mètre, et en tubes plus petits (7) de diamètre voisin de 0,2 à 0,4 mètres, disposés à la verticale.
Tous ces tubes sont étanches et consolidés triangulés par des haubans et entretoises (6') dans les trois dimensions. Les dits robustes tubes horizontaux (6) remplis d'eau constituent un test inertiel associé à la masse inertielle de l'ensemble de la structure et de ses modules, masse totale inertielle permettant une stable immobilité apte à s'opposer aux forces verticales de la houle communiquées à chaque module par chacun de leur petit flotteur actif de forme lenticulaire (1) d'un diamètre voisin de 4 à 8 mètres, qui flotte en surface sous laquelle les turbulences marines nuisibles sont réduites en épargnant donc l'ensemble de la structure submergée dont la densité est ajustée la plus voisine de celle de l'eau par adjonction de bouées passives annexes concrétisées par les petits tubes verticaux (7) étanches et vides, dits tubes prolongés jusqu'à dépasser la surface moyenne de la mer d'environ 2 mètres de plus permettant la régulation de la profondeur de submersion de l'ensemble, ainsi quasi automatiquement constante.

2. Dispositif houlomoteur submergé selon la revendication n° 1 **caractérisé par** des modules identiques individuels qui récupèrent l'énergie hydraulique de la houle actionné par flotteurs actifs (1) en des mouvements alternatifs verticaux communiqués par jonc flexible et/ou filin souple (5) prolongés par une tige rigide coulissante (4) via un système hybride électro mécanique (15) dont l'essentiel est une vis à billes coulissante (2) verticale et son écrou rotatif coaxial (10) immobile verticalement car maintenu entre deux butées rotatives, dit écrou qui entraîne en rotation à l'aide de roues libres (12 et 12') unisens un alternateur électrique (13) de forme discoïdale, à une vitesse en relation avec le pas de la vis (2) choisi judicieusement, dit vitesse qui est accélérée par un pas court voisin de 0,2 mètres. Le dit système hybride est protégé dans un carter (17) étanche sous pression pneumatique par air déshydraté introduit par tube réuni à un compresseur hors d'eau.

3. Dispositif houlomoteur selon revendication n° 2, **caractérisé par** l'écrou à billes (10) solidaire de deux roues libres à billes à rotation/blocage inversés (12) et (12') qui actionnent chacune une roue d'engrenage (21 et 22) qui engrènent chacune, en liaison avec l'autre, par l'intermédiaire d'un ou plusieurs groupes d'engrenages inverseurs du sens de rotation - dite roue et inverseur (15 et 15') à denture cylindrique, ou conique (21', 22' et 14), dont le résultat est un mouvement rotatif uni-sens à partir de celui alternatif de l'écrou tournant (10).

4. Dispositif houlomoteur selon revendication n° 3 **caractérisé par** un entrainement rotatif assoupli par incorporation d'une liaison élastique intercalaire concrétisée par un puissant ressort (16) à longue bande enroulée et accrochée d'une part dans un barillet (9) et roue d'autre part (9') - dite liaison élastique permettant une réduction des à-coups des fluctuations de vitesse communiqués par le système hybride gérant des mouvements alternatifs très aléatoires de la houle.

5. Dispositif houlomoteur selon revendication n° 2 **caractérisé par** un alternateur électrique de forme discoïdale de grand diamètre d'environ 1,5 à 3 mètres, disposant d'un rotor plat (13) dont la périphérie est équipée d'une succession de paires d'aimants permanents (29) très nombreux, alternant « nord » et « sud », agencée en inducteur magnétique plat introduit sans contact dans l'entre-fer magnétique d'un induit fixe (13), dit induit agencé par une succession de noyaux magnétiques qui est corollaire à celle des aimants : en nombre, espacement et position relative périphérique. Chacun des noyaux magnétiques, contrairement au circuit induit conventionnel monolithique feuilleté, est constitué de noyaux magnétiques juxtaposés désignés en « C » indépendants (27a) jouxtant avec un corolaire (27b) alternativement sur toute la périphérie de l'inducteur au pas double de celui des aimants (les 27a jouxtant les 27b) etc..Chaque noyau en « C » est constitué de 2 coquilles qui sont complémentaires et assemblées en vis-à-vis ménageant ainsi 2 espaces de jonction qui concrétisent 1 l'entre-fer de passage des inducteurs à aimants (29) et aussi facilitant l'incorporation d'un bobinage constitué d'au moins 2 grandes bobines circulaires (28a) et (28b) non interrompues et ce, tout au long de la périphérie de l'inducteur concrétisé par tous les « C » se jouxtant. Les dites bobines sont donc facilement introduites avant fermeture des coquilles en »C » et ce alternativement au double pas des aimants respectivement chacune dans les « C » (27a) pour la bobine (28a) et dans les « C » (27b) pour la bobine (28b).
La même bobine n'est donc qu'une fois sur 2 introduite dans un circuit magnétique en « C ».
Les dites « bobines » sont pourvues de prises munie électriques intermédiaires (33) via commutations électroniques régulatrices - le courant généré est monophasé de fréquence souhaitée bien plus élevée de quatre à vingt fois celle habituelle industrielle, dont le but est technico-économique par réduction des dimensions générales et surtout de celles des éléments magnétiques judicieusement choisis en « C » dont la qualité est appropriée aux fréquences jusqu'à pouvoir dépasser 1 kHz.

6. Dispositif houlomoteur selon revendication n° 5 caractérisé initialement d'un alternateur monophasé à un seul rotor inducteur (13 et 29), et stator induit (27) qui par l'adjonction de 2 autres groupes rotor et stator supplémentaires tout à fait identiques au premier initial dont les deux rotors (29' et 29") sont entraînés en rotation simultanément comme celui initial (29), permettant ainsi la génération de trois courants monophasés, dont la transformation éventuelle en triphasé s'effectue par un décalage angulaire de chacun des 2 rotors supplémentaires respectivement dans le même sens de rotation d'un tiers de pas des paires d' aimants pour l'un et de 2 tiers de pas pour l'autre, et ce par rapport au rotor initial inchangé. (Procédé de décalage angulaire aux résultats identiques si organisé au niveau des 2 induits stators fixes supplémentaires)

7. Dispositif houlomoteur selon revendications n°2 et 5 **caractérisé par** des moyens électroniques d'analyse, puis de pilotage de la régulation des grandeurs électriques issues de différents alternateurs électriques, chacun actionnés individuellement, - Dit analyse puis pilotage de la commutation de l'énergie électrique générée par chacun des différents alternateurs tous entraînés suivant les aléas de la houle et de ce fait, non synchronisables. La commutation électronique en liaison sur les prises intermédianes (33) ménagées sur les bobinages (28a et 28b) du stator 27a et 27b induit tend à unifier automatiquement (en courant ou tension) l'énergie électrique alternative issue de chacun des alternateurs. La dite commutation électronique ayant obtenu un effet régulateur égalisateur est ensuite suivie d'un redressement des courants alternatifs initiaux de valeur très peu différentes qui sont alors rendus ainsi continus, qui peuvent alors être branchés en série et/ou parallèle, réunis par câble individuel (31) de chaque module, vers un regroupement introduit dans un caisson étanche pressurisé central (30') étanche fixé au centre sous la grande structure.

8. Dispositif houlomoteur suivant revendications n°2 et n°7 **caractérisé par** un habrit (34) de forme lenticulaire hors d'eau juché sur un tube (7) renforcé et surélevé central à la grande structure qui incorpore un compresseur d'air relié par tubes (32) et (35) aux différents modules, par l'intermédiaire d'un caisson (30') étanche lui-même aussi pressurisé dans lequel est aussi incorporé un bornage électrique regroupant les câbles électriques dits de puissance (31) provenant de chaque module, bornage qui est le point de départ du câble sous-marin de puissance (38) de liaison entre l'ensemble houlomoteur en mer et le point récepteur (généralement lointain). Le dit compresseur est motorisé par l'intermédiaire d'une tringlerie lui transmettant l'énergie d'un flotteur spécifique actionné par la houle, et dont son admission d'air est protégée par un clapet chnockel et filtre déshydratant.

9. Dispositif houlomoteur selon revendication n° 2 **caractérisé par** une masse pesante (8) solidaire d'un organe mécanique comme une vis à billes (2) par clavette (37) et écrou (38) qui évolue dans un carter (17), lequel incorpore un ou plusieurs guides fixes verticaux anti-rotatoires (35) car enserrés par des coulisses (ou roulements) (36) équipant la dite masse, de grand diamètre (d'environ 1 à 1,5 mètres), dont l'énergie cinétique acquise lors de son élévation en cours de vague ascendante, est ensuite restituée lors de sa descente au cours du creux de la vague qui ne porte plus le flotteur (1). Présente disposition pour distribuer une motricité alternative verticale (à double effet) ainsi dans les deux sens de mouvement, dite masse pesante s'ajoutant avec intérêt à la masse inertielle de chaque module et de l'ensemble de la grande structure.

10. Dispositif houlomoteur selon revendication n°3 **caractérisé par** le système hybride électro-mécanique incorporant au moins 2 groupes d'engrenages inverseurs (15/15') dont leur rotation est discontinue (car issue du mouvement alternatif), est transmise, 1 alternance sur 2, par une troisième roue libre à billes (23) interposée entre le rotor de l'alternateur solidaire de la bague (21') et la roue (21) engrenant avec les groupes d'engrenage inverseurs cylindriques (15'/15) et roue (22) - (corollairement en variante avec l'inverseur à roues à denture conique) et roue libre (23') non représentée.

11. Dispositif houlomoteur selon revendication n°2 **caractérisé par** une pompe à piston très conventionnelle (partiellement représentée) actionnée par les mouvements relatifs entre le tube (18) fixe équipé à sa partie supérieure d'un piston et divers clapets en bas et en haut, coulissant à l'intérieur de la vis à billes creuse (2) qui est animée d'un mouvement alternatif vertical. L'huile (19) qui est puisée au fond du carter (17) où est fixé le tube (18) est chargée de lubrifier et de refroidir tout le mécanisme introduit dans le carter (17). Sauf la partie électrique de l'alternateur qui tourne « à sec », dite alternateur protégé des projections d'huile par les chicanes (26) (26'), (ou autres joints d'étanchéité tournants) qui est cependant refroidi par contact avec le carter (17) toujours froid car submergé
